# EUROPEAN PATENT SPECIFICATION

(11) **EP 0 684 402 B1**
(45) Date of publication and mention of the grant of the patent: **19.04.2000**
(21) Application number: 95107348.5
(22) Date of filing: 15.05.1995
(51) Int. Cl.: F16D 55/36, F16D 65/16

(54) **Brake with multiple disks in an oil bath with dual separate actuation systems for normal and emergency braking arranged inside the axle, particularly for earth-moving farm machines and the like**
Im Ölbad laufende, mit zwei getrennten Betätigungssystemen für Not- und normale Bremsung ausgerüstete Mehrscheibenbremse, die im Inneren einer Achse angeordnet ist, insbesondere für landwirtschaftliche Erdbewegungsmaschinen und dergleichen
Frein multi-disque à bain d'huile avec deux systèmes d'actionnement séparés pour freinage normal et d'urgence disposé à l'intérieur d'un axe, en particulier pour engines agricoles de terrassement et similaires

(30) Priority: 20.05.1994 IT MI940373 U
(43) Date of publication of application: 29.11.1995
(73) Proprietor: CLARK-HURTH COMPONENTS S.p.A., I-38062 Arco (Trento) (IT)
(72) Inventor: Angeretti, Nemo, I-38066 Riva del Garda (Prov. of Trento) (IT)
(74) Representative: Modiano, Guido, Dr.-Ing.

(56) References cited:
- WO-A-91/15686
- DE-A- 2 928 091
- US-A- 3 927 737
- US-A- 4 184 573

## Description

The present invention relates to a brake with multiple disks in an oil bath of the type having fluid-actuated normal braking and spring-actuated, hydraulically-opened emergency or parking braking, improved so that the actuation cylinders are both inside the vehicle axle and so as to offet reliable tightness against any oil leaks inside said axle, said brake being particularly suitable for earth-moving farm machines and for industrial vehicles in general.

As background to the present invention, US-A-3 927 737 and US-A-4 184 573 disclose dual actuation disc brake systems having fluid-actuated formal brakes and spring-actuated, hydraulically-released parking brakes. DE-A-2 928 091 discloses a hydraulic brake in which a brake piston in the main cylinder is provided with two gaskets to prevent loss of brake fluid from the end of the cylinder. A bleeding hole located between the gaskets leads to a transparent vessel which is used to easily check for loss of brake fluid through the inner gasket.

WO 91/15686 discloses a brake with multiple disks in an oil bath of the type having a fluid actuation system for normal braking and a spring-actuated, hydraulically-opened actuation system for parking braking, multiple mutually facing braking disks which are rigidly coupled to the axle shaft of the vehicle, a pusher disk for closing said disks and, inside the axle and coaxially to said disks and to said pusher disk, a dual actuation device which is constituted by two annular pistons which are concentric and coaxial with respect to said pusher disk, the outermost piston, provided for parking braking, being kept closed against said pusher disk by cup-shaped springs by virtue of a conventional mechanical device and being opened by means of pressurized oil, the inner annular piston for normal braking being instead actuated by pressurized oil.

Brakes with a dual actuation system (a fluid-actuated one for normal braking and a mechanical spring-actuated, hydraulically-opened one for parking and emergency braking) are currently present in many applications for axles of earch-moving machines.

In many cases the metal cable that closes the levers for the mechanical actuation of the brakes is simply replaced with a cylinder having a piston that is closed by springs and opened by oil pressure.

However, this system creats a bulk on the outside of the axle that is not always acceptable for the user; on the other hand, the solution of transferring the brake actuation cylinders inside the axle is often not appreciated by the user, since significant oil leaks may occur because the negative (parking) brake works under pressure for many hours, differently from the normal brake.

Accordingly, the aim of the present invention is mainly to provide a brake with multiple disks in an oil bath which is conceived and structured so as to eliminate the possibility of leaks of pressurized oil towards the vehicle axle and thus of mixing two mutually incompatible oil types, although it has a brake actuation system, both for parking braking and for normal braking, which is arranged inside the axle.

An object of the invention is to provide a brake with multiple disks having separate actuation devices for fluid-actuated normal braking and for mechanical spring-actuated, hydraulically-opened braking which are structured so that they are highly reliable, have a limited bulk, and have a modest cost with respect to conventional systems.

This aim, these objects and others which will become apparent from the following description are achieved by a brake with multiple disks in an oil bath for axles of industrial vehicles in general and particularly for axles of earth-moving machines, said brake being of the type having a fluid actuation system for normal braking and a spring-actuated, hydraulically-opened actuation system for parking braking (negative braking), multiple braking disks which are rigidly coupled to the axle shaft, and a disk-like body acting as closing pusher for said disks, said brake with multiple disks having, according to the present invention, inside the axle and coaxially to said disks and to said pusher disk, a dual actuation device which is constituted by two annular pistons which are concentric and coaxial with respect to said pusher disk, the outermost piston, provided for parking braking, being kept closed against said pusher disk by cup-shaped springs or the like by virtue of a conventional mechanical device and being opened by means of pressurized oil, the inner annular piston for normal braking being instead actuated by pressurized oil fed through a channel that passes through said outer piston, at least two pairs of outer sealing gaskets, each pair having at least one related vent, said outer sealing gaskets and related vents being provided on the outer cylindrical surfaces of said outer piston, each of said vents being interposed between the gaskets of the respective pair of outer sealing gaskets for conveying outward any oil leaks, one of said vents being located so as to coincide with said channel that passes through the outer piston so as to allow to feed pressurized oil to the piston for normal braking and to discharge any leaks in the reservoir of the master pump that actuates the normal brake.

More particularly, said outer piston for opening the parking brake is preferably provided with two different diameters and so that it is slideable in a correponding jacket for the cylinder, in order to form an annular step between the piston and the jacket that allows to introduce the pressurized oil in order to move the parking brake so as to open it.

Furthermore, two sealing gaskets, with their related upper or lateral vent and lower drainage duct, are provided on each one of the two outer surfaces of said outer annular piston, which have different diameters.

A mechanical system is also provided which allows manual intervention by means of a gear and screw to adjust the stroke of the pistons, and there is also an emergency mechanical opening system for the parking brake.

Further characteristics and advantages of the present invention will become apparent from the following detailed description, given with reference to the accompanying drawings, which are provided merely by way of non-limitative example and wherein:
figure 1 is an axial diametrical sectional view of a steering and/or fixed axle of an industrial earth-moving vehicle including a brake with multiple disks in an oil bath with braking actuation systems executed according to the invention, and
figure 2 is an enlarged-scale view only of the unit with the concentric pistons and with the associated double sealing gaskets for normal braking, which is independent of parking braking.

With reference to the above figures, and as specified earlier, the brake with multiple disks in an oil bath of the type having a fluid actuation system for normal braking and a spring-actuated, hydraulically-opened actuation system for parking braking is substantially known and is more precisely of type having, within an axle 1, a pack of conventional braking disks, generally designated by the reference numeral 3, which is keyed on the axle shaft 2 and enclosed in an oil bath; in order to actuate said disks so that they close, there is a strong pusher disk 4 which is movable, with a limited stroke, towards and away from said pack of disks. In a brake of this kind, the present invention uses, for actuating the actuation system for normal braking, which is independent of parking braking, two annular pistons 5 and 6 which are concentric with respect to each other and with respect to the axle shaft 2 on which the disks 3 and the pusher disk 4 are keyed.

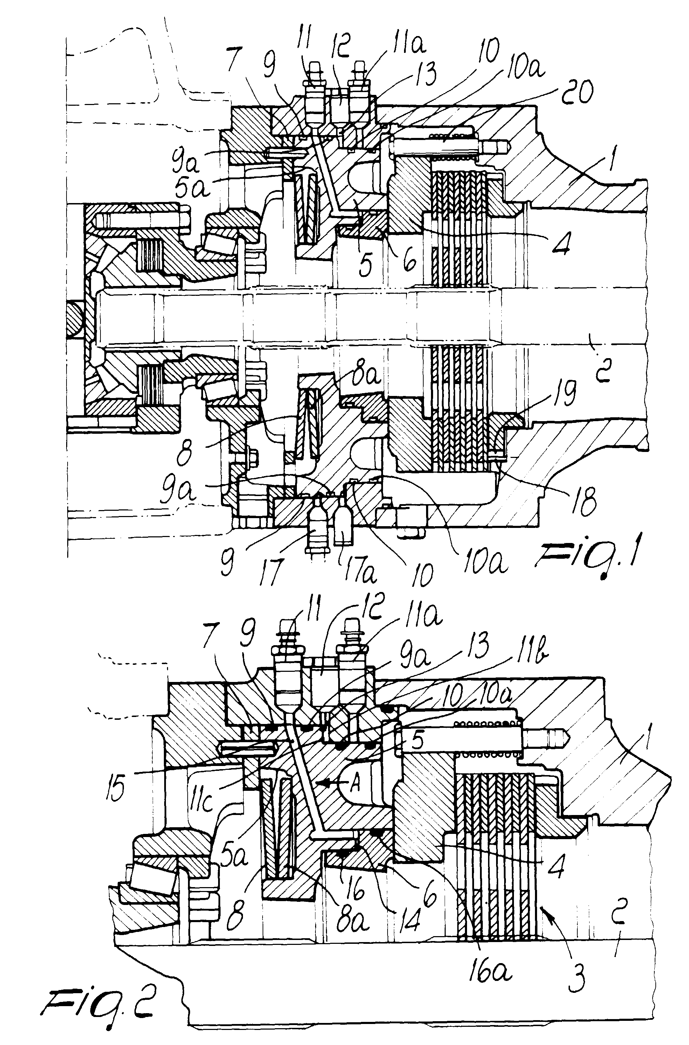

The outer annular piston 5 is interposed between said pusher disk 4 and a fixed shoulder 7 and is provided for the closing actuation of the pack of braking disks; for this purpose, in the rear part of said piston, i.e. in the face lying opposite to the one that is in contact with the pusher disk 4, there is a flared region 5a (figure 2) inside which a pair of cup-shaped springs 8-8a acts.

Said outer piston 5 has two different diameters, and two sealing gaskets, respectively 9-9a and 10-10a, are provided on the cylindrical surfaces of said diameters; between each pair of gaskets there is a vent 11-11a which is connected to the reservoir of the master actuation pump of the normal braking system; said vents are meant to convey outside any oil that might leak from the first two gaskets of each pair, i.e. from the gaskets designated by the reference numerals 9a and 10, since the pressurized oil for the opening actuation of the brake (i.e. in direction of the arrow A of figure 2) is fed through a connector 12 into the annular chamber 13 formed by the fixed annular wall 11b and by the opposite wall 11c of said piston 5.

The normal braking piston 6, which is formed in the piston 5 and concentrically thereto, also has two diameters, with a chamber 14 for introducing oil at an annular step formed between the two pistons (figure 2); according to the invention, there is a duct 15 for the actuation of said piston, and said duct passes through the piston 5 and is advantageously connected to an upper vent, for example to the vent 11. The pressurized oil can be sent through this vent into the chamber 14 for the actuation of the normal braking piston 6. Two sealing gaskets 16 and 16a are furthermore formed at the two opposite sides of the cylindrical chamber 14.

the advantage of feeding the oil into the chamber 14 threough an upper vent is that the normal brake circuit (i.e. the chamber 149 is in the discharge step, i.e. is not pressurized, any oil that might leak from the actuation system of the piston 5 (chamber 13) can return to the brake oil reservoir, whereas if the normal braking system is under pressure no leakage can occur.

Both braking circuits (the normal one and the parking one) can have separate vents 17-17a (figure 1) for the normal drainage of the piston sliding chambers.

Also according to the invention, these is a mechanical device for adjusting the stroke (and clearances) of the parking piston 5; said device is for example a toothed pinion 18 that actuates a ring gear 19 threaded on the body of the axle and acting directly against said piston (figure 1). The brake according to the invention is also provided with a system for the emergency mechanical opening of the parking brake, executed according to the known art, which acts on the pusher disk 4. Finally, the reference numeral 20 designates a device for adjusting the return stroke of the pusher disk.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Brake with multiple disks in an oil bath for axles of farm and industrial vehicles in general, of the type having a fluid actuation system for normal braking and a spring-actuated, hydraulically-opened actuation system for parking braking, multiple mutually facing braking disks (3) which are rigidly coupled to the axle shaft (2) of the vehicle, a pusher disk (4) for closing said disks (3) and, inside the axle and coaxially to said disks (3) and to said pusher disk (4), a dual actuation device which is constituted by two annular pistons (5,6) which are concentric and coaxial with respect to said pusher disk (4), the outermost piston (5), provided for parking braking, being kept closed against said pusher disk (4) by cup-shaped springs (8-8a) or the like by virtue of a conventional mechanical device and being opened by means of pressurized oil, the inner annular piston (6) for normal braking being instead actuated by pressurized oil, characterized in that a channel (15) passes through said outer piston (5) for feeding the pressurized oil for actuating the normal braking, said outer piston (5) having at least two pairs of outer sealing gaskets (9-9a;10-10a), each pair having at least one related vent (11-11a), said outer sealing gaskets (9-9a;10-10a) and related vents (11-11a) being provided on the outer cylindrical surfaces of said outer piston (5), each of said vents (11-11a) being interposed between the gaskets of the respective pair of outer sealing gaskets (9-9a;10-10a) for conveying outward any oil leaks, one of said vents (11) being located so as to coincide with said channel (15) that passes through the outer piston (5) so as to allow to feed pressurized oil to the piston (6) for normal braking.

2. Brake with multiple disks according to Claim 1 wherein said outer piston (5) for parking braking is provided with two different diameters and is slideable in a cylindrical jacket having a matching shape, so as to form an annular step between the piston and the jacket that allows to introduce pressurized oil in order to move the parking brake so that it opens.

3. Brake with multiple disks according to Claim 2 wherein two sealing gaskets (9-9a;10-10a) are provided on each one of the two outer cylindrical surfaces with different diameters of said parking braking piston and have a related upper or lateral vent (11-11a) between the gaskets of each pair and also a lower drainage (17-17a).

4. Brake with multiple disks according to the preceding claims comprising a mechanical system (18-19) or the like to compensate for clearances and adjust the stroke of the pistons.

5. Brake with multiple disks according to the preceding claims comprising an emergency mechanical opening system for the parking brake.

## Patentansprüche

1. Bremse mit Mehrfachscheiben in einem Ölbad für Achsen von landwirtschaftlich oder industriellen Fahrzeugen im allgemeinen mit einem flüssigkeitsbetätigten System für normales Bremsen und einem federbetätigten hydraulisch zu öffnenden Betätigungssystem für Park-Bremsen mit vielfach wechselseitig aneinanderliegenden Bremsscheiben (3), die fest mit der Achswelle (2) des Fahrzeuges verbunden sind, einer Druckscheibe (4) zum Schließen der genannten Scheiben (3) und innerhalb der Achse koaxial zu den genannten Scheiben (3) und zu der genannten Druckscheibe (4) einem doppelten Betätigungsmittel, welches von zwei Ringkolben (5,6) gebildet wird, die konzentrisch und koaxial in Bezug auf die genannte Druckscheibe (4) angeordnet sind, wobei der äußere Kolben (5) vorgesehen für Park-Bremsen gegen die Druckscheibe (4) durch Tellerfedern (8-8a) oder dgl. mit Hilfe eines konventionellen mechanischen Mittels gehalten wird und mit Hilfe von Drucköl geöffnet wird, wobei der innere Ringkolben (6) für normales Bremsen demgegenüber durch Drucköl aktiviert wird,
dadurch gekennzeichnet,
dass ein Kanal (15) zum Einbringen von Drucköl zur Aktivierung des normalen Bremsens durch den genannten äußeren Kolben (5) hindurchführt, der genannte äußere Kolben (5) Dichtungen (9-9a;10-10a) aufweist, jedes Paar wenigstens ein zugehöriges Ventil (11-11a) aufweist, die genannten äußeren Dichtungen (9-9a;10-10a) und zugehörige Ventile (11-11a) auf den äußeren zylindrischen Oberflächen des genannten äußeren Kolbens (5) vorgesehen sind, jedes der genannten Ventile (11-11a) zwischen den Dichtungen der entsprechenden Paare der äußeren Dichtung (9-9a;10-10a) positioniert ist zur Abführung jeglicher äußeren Ölleckage, eines der genannten Ventile (11) so angeordnet ist, dass es mit dem genannten Kanal (15) fluchtet, welcher durch den äußeren Kolben (5) hindurchführt, um die Zuführung des Drucköls zum Kolben (6) für normales Bremsen zu ermöglichen.

2. Bremse mit Mehrfachscheiben nach Anspruch 1, bei der der äußere Zylinder (5) für Park-Bremsen mit zwei unterschiedlichen Durchmessern ausgestattet ist und gleitbar in einem zylindrischen Gehäuse mit einer angepassten Form angeordnet ist, um eine ringförmige Stufe zwischen dem Kolben und dem Gehäuse zu bilden, welche es erlaubt, Drucköl einzuführen, um die Park-Bremse so zu bewegen, dass sie öffnet.

3. Bremse mit Mehrfachscheiben nach Anspruch 2, bei der zwei Dichtungen (9-9a;10-10a) an jeder der beiden äußeren zylindrischen Oberflächen mit unterschiedlichen Durchmessern des genannten Park-Bremsen-Kolbens vorgesehen sind und mit einem zugehörigen oberen oder lateralen Ventil (11-11a) zwischen den Dichtungen jedes Paares und ebenso eine untere Drainage (17-17a).

4. Bremse mit Mehrfachscheiben nach einem der vorangegangenen Ansprüche mit einem mechanischen System (18-19) oder dgl. zur Kompensation der Spaltweiten und zur Einstellung des Hubes der Kolben.

5. Bremse mit Mehrfachscheiben nach einem der vorangegangenen Ansprüche mit einem mechanischen Notöffnungssystem für die Park-Bremse.

## Revendications

1. Frein multi-disque à bain d'huile pour essieux de véhicules agricoles ou industriels en général, du type comprenant un système d'actionnement par fluide pour le freinage normal et un système d'actionnement actionné par ressort, à ouverture hydraulique, pour freinage de parking, des disques de frein (3) multiples mutuellement en regard qui sont rigidement accouplés à l'arbre d'essieu (2) du véhicule, un disque pousseur (4) pour fermer lesdits disques (3) et, à l'intérieur de l'essieu, disposé coaxialement par rapport auxdits disques (3) et audit disque pousseur (4), un dispositif d'actionnement double qui est constitué de deux pistons annulaires (5, 6) qui sont concentriques et coaxiaux par rapport audit disque pousseur (4), le piston le plus à l'extérieur (5), prévu pour le freinage de parking, étant maintenu fermé contre ledit disque pousseur (4) par des ressorts (8-8a) en forme de coupelles ou analogues grâce à un dispositif mécanique conventionnel et étant ouvert au moyen d'huile sous pression, le piston annulaire intérieur (6) pour le freinage normal étant pour sa part actionné par de l'huile sous pression, caractérisé en ce qu'un canal (15) traverse ledit piston extérieur (5) pour fournir l'huile sous pression pour actionner le freinage normal, ledit piston extérieur (5) comportant au moins deux paires de joints d'étanchéité extérieurs (9-9a ; 10-10a), chaque paire comprenant au moins une soupape associée (11-11a), lesdits joints d'étanchéité extérieurs (9-9a ; 10-10a) et les soupapes associées (11-11a) étant réalisés sur les surfaces cylindriques extérieures dudit piston extérieur (5), chacune desdites soupapes (11-11a) étant interposée entre les joints de la paire respective de joints d'étanchéité extérieurs (9-9a ; 10-10a) pour évacuer vers l'extérieur toute fuite d'huile, une desdites soupapes (11) étant disposée de manière à coïncider avec ledit canal (15) qui traverse le piston extérieur (5) de manière à permettre d'alimenter le piston (6) pour le freinage normal en huile sous pression.

2. Frein multi-disque selon la revendication 1, dans lequel ledit piston extérieur (5) pour le freinage de parking présente deux diamètres différents et peut coulisser dans une chemise cylindrique ayant une forme correspondante de façon à former un décrochement annulaire entre le piston et la chemise qui permet d'introduire de l'huile sous pression afin de déplacer le frein de parking de manière à ce qu'il s'ouvre.

3. Frein multi-disque selon la revendication 2, dans lequel deux joints d'étanchéité (9-9a ; 10-10a) sont prévus sur chacune des deux surfaces cylindriques extérieures avec des diamètres différents dudit piston de freinage de parking et possèdent une soupape supérieure ou latérale associée (11-11a) entre les joints de chaque paire et également un drainage inférieur (17-17a).

4. Frein multi-disque selon les revendications précédentes, comprenant un système mécanique (18-19) ou analogue pour compenser les jeux et ajuster la course des pistons.

5. Frein multi-disque selon les revendications précédentes, comprenant un système d'ouverture mécanique d'urgence pour le frein de parking.
